# EUROPEAN PATENT APPLICATION

(11) **EP 3 922 516 A1**
(43) Date of publication of application: **15.12.2021**
(21) Application number: 21178130.7
(22) Date of filing: 08.06.2021
(51) Int. Cl.: B60R 16/033

(54) **SYSTEM FOR CONNECTING A MOTOR BATTERY TO A SERVICE BATTERY**

(30) Priority: 08.06.2020 IT 202000013585
(71) Applicant: GES International S.r.l., 20099 Sesto San Giovanni (MI) (IT)
(72) Inventor: LOMOLINO, Tiziano, I-20099 Sesto San Giovanni (MI) (IT); ROSENFELD, Manuel, I-20099 Sesto San Giovanni (MI) (IT)
(74) Representative: Maccalli, Marco

(57) **Abstract**

It is disclosed a system for the electrical connection between a motor battery **(115)** and at least one service battery **(125)** in a vehicle comprising a motor **(105)** mechanically coupled to a current generator **(110)** adapted to generate a current (**Ia**) when the motor **(105)** is turned on, and an electrical switching box **(120)** electrically coupled to said at least one service battery **(125),** said system comprising a coupling module **(205)** distinct from the electrical switching box **(120)** and configured to:
- electrically couple in a selective way the motor battery **(115)** to the electrical switching box **(120)** when the motor is turned off, and
- electrically couple in a selective way the motor battery **(115)** to the at least one service battery **(125)** when the motor is turned on, for allowing the charging of the motor battery **(115)** and of the at least one service battery **(125)** by means of the current (**Ia**) generated by the current generator **(110)** without involving the electrical switching box **(120).**

## Description

### Field of the invention

The present invention relates to the field of electrical engineering. In particular, the present invention refers to the sector of batteries employed in motor vehicles.

### Background of the invention

As is known, vehicles equipped with an internal combustion engine comprise an electric battery whose main purpose is to manage the starting operations of the combustion engine. This electric battery (hereinafter referred to as "motor battery") is recharged when the combustion engine is switched on by means of a current generator (for example an alternator) coupled to the combustion engine.

The motor battery can also be used to power the vehicle's electrical system when the engine is off.

However, in certain types of motor vehicles, such as campers and boats, the electrical system is connected to a plurality of electrical loads (hereinafter, "utilities") which may include both low-consumption utilities such as lights, and high consumption utilities such as a refrigerator compressor, a water pump, an electrical resistance of a water heater and so on. The motor battery cannot be used to power these loads even with the engine off, as it would run out in a short time .

For this reason, it is known to equip such vehicles with one or more additional batteries (hereinafter, "service batteries") suitable to be used to power the utilities. While the motor battery is designed to deliver relatively large amounts of current for a short time (when starting the engine), a service battery is preferably designed to provide relatively smaller amounts of current but for much longer durations.

It is known to electrically connect the motor battery and the service battery (batteries) as follows:
- when the vehicle engine is off, the motor battery is electrically isolated from the service battery (batteries), so as to prevent the motor battery from discharging;
- when the vehicle engine is running, the motor battery is electrically coupled (for example, connected in parallel) to the service battery (batteries), to allow simultaneous recharging of all batteries.

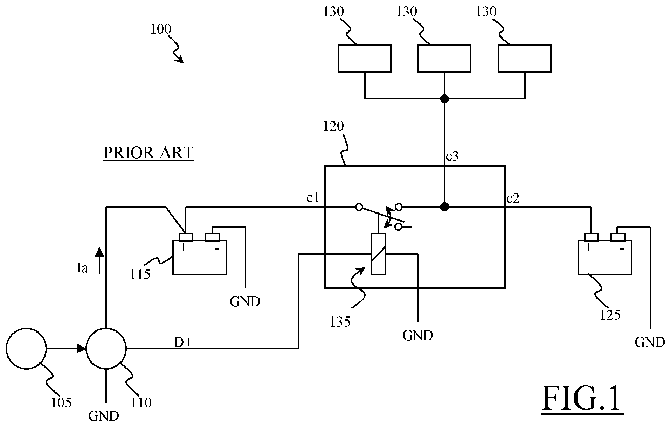

**Figure 1** illustrates in greater detail a system **100** for the electrical connection between a motor battery and a service battery in a motor vehicle in accordance with a solution known in the art.

Reference **105** schematically illustrates the engine of the vehicle. The engine **105** is mechanically coupled, for example by means of a belt (not shown), to a current generator, such as an alternator **110,** which converts the mechanical energy supplied by the engine **105** into electrical energy in the form of direct current.

The alternator **110** has a first electrical terminal connected to a positive terminal of the motor battery of the vehicle, identified in the figure with the reference **115,** and a second electrical terminal connected to a terminal **GND** adapted to supply a reference voltage (ground). The alternator **110** is also provided with a signaling terminal adapted to supply a signal D + which signals a condition of turned on engine **105.**

The motor battery **115** also has a negative terminal connected to the terminal **GND**.

The positive terminal of the motor battery **115** is also electrically connected to a first electrical terminal **c1** of a vehicle electrical switching box, identified in the figure with the reference **120.**

The service battery of the vehicle, identified in the figure with the reference **125,** has a positive terminal connected to a second electrical terminal **c2** of the electrical switching box **120,** and a negative terminal connected to the terminal **GND.**

The electrical switching box **120** comprises a third electrical terminal **c3** electrically connected to one or more utilities **130** of the vehicle (for example, a compressor of a refrigerator, a water pump, an electrical resistance of a water heater). The third electrical terminal **c3** and the second electrical terminal **c2** of the electrical switching box **120** are electrically connected, so that the service battery **125** can supply current for powering the utilities **130.**

The electrical switching box **120** comprises a relay ("bridge relay") **135** for the selective parallel connection of the motor battery **115** to the service battery **125.**

In the example illustrated in the figure, the relay **135** comprises a mobile contact electrically connected to the first electrical terminal c1 of the electrical switching box **120** (and therefore electrically connected to the positive terminal of the motor battery **115),** a first fixed contact electrically connected to the second electrical terminal **c2** of the electrical switching box **120** (and therefore electrically connected to the positive terminal of the service battery **125),** and a second fixed floating contact. The relay **135** also comprises an electromagnet (for example a coil of wire made of conductive material wrapped around a core of ferromagnetic material) having a first electrical terminal connected to the signaling terminal of the alternator **110** so as to receive the signal D+ from the latter, and a second electrical terminal connected to the terminal **GND.**

When the engine **105** is off, the relay **135** of the electrical switching box **120** is in the rest condition, with the mobile contact being in contact with the second fixed contact ("normally open contact"). In this condition, the motor battery **115** and the service battery **125** are electrically isolated from each other, and any current required by the utilities **130** is supplied only by the service battery **125,** so as to preserve the charge of the motor battery **115.**

When the engine **105** is on, the signal D+ produced by the alternator **110** energizes the electromagnet of the relay **135,** moving the mobile contact into contact with the first fixed contact. In this condition, the motor battery **115** and the service battery **125** are electrically connected in parallel with each other, and charged by the current - identified in the figure with the reference **Ia** - generated by the alternator **110** following the activation of the engine **105.**

### Summary of invention

The applicant has detected that the solutions known in the art based on the previously described architecture are not satisfactory as affected by a rather significant drawback.

In particular, in accordance with the known solutions, when the engine is running and the relay of the electrical switching box connects the motor battery in parallel with the service battery, the current generated by the alternator will flow into the wiring and connections of the electrical switching box, connected in turn to the utilities. Since these wiring and connections are not suitable for the passage of high currents, such as the current generated by the alternator when the engine is running, the possibility of faults is quite high.

In consideration of the above, the Applicant has devised a system for the selective connection of the motor battery with one or more service batteries which is not affected by the drawbacks affecting the known solutions.

An aspect of the present invention relates to a system for the electrical connection between a motor battery and at least one service battery in a vehicle comprising a motor mechanically coupled to a current generator adapted to generate a current when the motor is turned on, and an electrical switching box electrically coupled to said at least one service battery.

Said system comprises a coupling module distinct from the electrical switching box and configured to:
- electrically couple in a selective way the motor battery to the electrical switching box when the motor is turned off, and
- electrically couple in a selective way the motor battery to the at least one service battery when the motor is turned on, for allowing the charging of the motor battery and of the at least one service battery by means of the current generated by the current generator without involving the electrical switching box.

According to an embodiment of the present invention, said coupling module comprises a first terminal electrically coupled to the motor battery.

According to an embodiment of the present invention, said coupling module comprises a second terminal electrically coupled to a first electric terminal of the electrical switching box.

According to an embodiment of the present invention, said coupling module comprises a third terminal electrically coupled to said at least one service battery.

According to an embodiment of the present invention, said coupling module is configured to electrically couple the first terminal of the coupling module to the second terminal of the coupling module when the motor is turned off.

According to an embodiment of the present invention, said coupling module is configured to electrically couple the first terminal of the coupling module to the third terminal of the coupling module when the motor is turned on.

According to an embodiment of the present invention, the coupling module comprises a relay.

According to an embodiment of the present invention, said relay comprises:
- a mobile contact electrically connected to the first terminal of the coupling module;
- a first fixed contact electrically connected to the second terminal of the coupling module, and
- a second fixed contact electrically connected to the third terminal of the coupling element.

According to an embodiment of the present invention, said relay is configured in such a way that:
- the mobile contact is in contact with the first fixed contact when the motor is turned off;
- the mobile contact is in contact with the second fixed contact when the motor is turned on.

According to an embodiment of the present invention, said relay is adapted to receive a signal indicative of a turned on motor condition.

According to an embodiment of the present invention, said relay is configured to cause the mobile contact contact the second fixed contact based on the reception of said signal.

According to an embodiment of the present invention, said vehicle is a camper or a boat.

According to an embodiment of the present invention, said at least one service battery is electrically connected to at least one electric load for supplying said at least one electric load.

### Brief description of the annexed drawings

These and other features and advantages of the present invention will be made apparent by the following detailed description of an exemplary embodiment thereof, purely provided by means of a non-limitative example, to be read making reference to the attached drawings, wherein:
**Figure 1** illustrates an electrical connection system between a motor battery and a service battery in a motor vehicle in accordance with a solution known in the art;
**Figure 2A** illustrates an electrical connection system between a motor battery and a service battery in a motor vehicle in accordance with one embodiment of the present invention when the vehicle engine is turned off, and
**Figure 2B** illustrates the system of **Figure 2A** when the vehicle engine is switched on.

### Detailed description of preferred embodiments of the invention

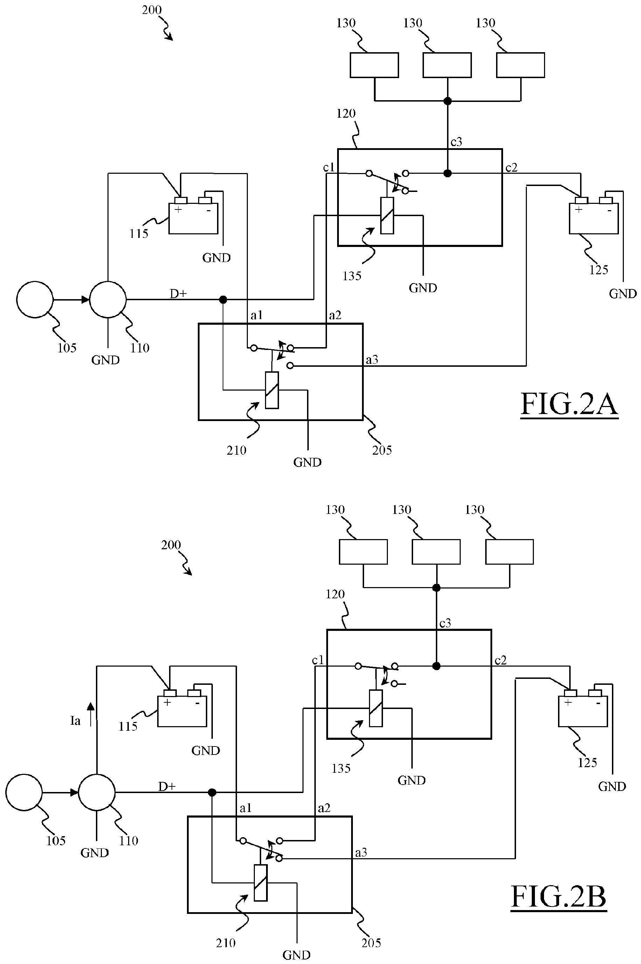

**Figures 2A** and **2B** illustrate a system **200** for the electrical connection between a motor battery and a service battery of a motor vehicle, such as a camper or a boat, in accordance with an embodiment of the present invention.

The elements of the system **200** illustrated in **Figures** and **2A** and **2B** corresponding to the elements of the system **100** illustrated in **Figure** 1 are identified with the same reference numbers, and will not be described again in order not to complicate the reading of this document.

**Figure 2A** illustrates the system **200** when the engine **105** is turned off, while **Figure 2B** illustrates the system **200** when the motor **105** is turned on.

According to an embodiment of the present invention, the system **200** for the electrical connection between the motor battery **115** and the service battery **125** is configured in such a way that, when the motor battery and the service battery **125** are electrically coupled to each other to be charged from the current **Ia** generated by the alternator **110** following the activation of the engine **105,** this current **Ia** does not cross the wiring and connections of the electrical switching box **120.**

In greater detail, the system **200** in accordance with an embodiment of the present invention comprises a coupling module, identified in the figure with the reference **205,** suitable for electrically coupling the motor battery **115** and the service battery **125** in a selective manner without involving the electrical switching box **120.**

According to the solutions known in the art, the positive terminal of the motor battery **115** is directly connected to the first electrical terminal **c1** of the electrical switching box **120.**

Differently, in accordance with an embodiment of the present invention, the positive terminal of the motor battery **115** is no longer directly electrically connected to the first electrical terminal **c1** of the electrical switching box **120,** but is instead connected to the coupling module **205,** so that it can be coupled to the first electrical terminal **c1** of the electrical switching box **120** in a selective manner.

In greater detail, in accordance with an embodiment of the present invention, the coupling module **205** is configured for:
- electrically coupling the motor battery **115** to the electrical switching box **120** (in particular to the first electrical terminal **c1** of the electrical switching box **120)** when the motor **105** is off (see **Figure 2A****);**
- electrically coupling the motor battery **115** to the service battery **125** when the engine **105** is running, and the alternator is delivering the current **la,** to allow the motor battery **105** and the service battery **115** to be charged by means of the current **Ia** without involving the electrical switching box **120** (see **Figure 2B****).**

In accordance with an embodiment of the present invention, the coupling module **205** has a first terminal **a1** electrically coupled to the positive terminal of the motor battery **115,** a second terminal **a2** electrically coupled to the first electrical terminal **c1** of the electrical switching box **120** (and therefore to the mobile contact of the relay **135),** and a third terminal **a3** electrically coupled to the positive terminal of the service battery **125.**

In accordance with an embodiment of the present invention, the coupling module **205** is configured for :
- electrically coupling its first terminal **a1** with its second terminal **a2** when the engine **105** is off (see **Figure 2A****),** and
- electrically coupling its first terminal **a1** with its third terminal **a3** when the engine **105** is running, and the alternator **110** is supplying the current **Ia** (see **Figure 2B****).**

In this way, when the engine **105** is off (see **Figure 2A****)**, the motor battery **105** is electrically decoupled from the service battery **125,** since the positive terminal of the motor battery **115,** although electrically coupled to the first electrical terminal **c1** of the electrical switching box **120,** is in any case electrically decoupled from the positive terminal of the service battery **125** because the relay **135** included in the electrical switching box **120** is in the rest condition, with the mobile contact that is in contact with the second fixed contact. In this condition, the motor battery **115** and the service battery **125** are electrically isolated from each other, and any current required by the utilities **130** is supplied by the service battery **125** only, so as to preserve the charge of the motor battery **115.**

On the other hand, when the engine **105** is on (see **Figure 2B****),** the motor battery **105** is electrically coupled (in parallel) to the service battery **125,** since the positive terminal of the motor battery **115** is electrically coupled to the positive terminal of the service battery **125.** However, unlike the known solutions (such as the one illustrated in **Figure 1****),** this electrical coupling does not involve the electrical switching box **120.** Consequently, in accordance with an embodiment of the present invention, the current **Ia** generated by the alternator **110** when the engine **105** is switched on charges the motor battery **115** and the service battery **125** by passing through the coupling module **205,** and without flowing through the wiring and connections of the electrical switching box **120,** thus reducing wear and increasing the operating life of the electrical switching box **120** itself.

In accordance with a preferred embodiment of the invention, the coupling module **205** comprises a relay **210.**

In accordance with an embodiment of the present invention, the relay **210** comprises a mobile contact electrically connected to the first terminal **a1** of the coupling module **205** (and therefore electrically connected to the positive terminal of the motor battery **115),** a first fixed contact electrically connected to the second terminal **a2** of the coupling module **205** (and therefore electrically connected to the first electrical terminal **c1** of the electrical switching box **120),** and a second fixed contact electrically connected to the third terminal **a3** of the coupling module **205** (and therefore electrically connected to the positive terminal of the service battery **125).**

In accordance with an embodiment of the present invention, the relay **210** further comprises an electromagnet (for example a coil of wire made of conductive material wrapped around a core of ferromagnetic material) having a first electrical terminal connected to the signalling terminal of the alternator **110** so as to receive the signal D+ from the latter, and a second electrical terminal connected to the terminal **GND.**

When the motor **105** is off (see **Figure 2A****),** the relay **210** of the coupling module **205** is in the rest condition, with the mobile contact that is in contact with the first fixed contact ("normally open contact"). In this condition, the first terminal **a1** of the coupling module **205** is electrically connected to the second terminal **a2** of the coupling module **205,** while it is electrically decoupled from the third terminal **a3** of the coupling module **205.**

When the engine **105** is on (see **Figure 2B****),** the signal D + produced by the alternator **110** energizes the electromagnet of the relay **210,** moving the mobile contact into contact with the second fixed contact. In this condition, the first terminal **a1** of the coupling module **205** is electrically connected to the third terminal **a3** of the coupling module **205,** while it is electrically decoupled from the second terminal **a2** of the coupling module **205.**

The system **200** according to the embodiments of the present invention is easy to implement and can be easily realized starting from a system already installed in a vehicle (for example a camper or a boat), such as a system that is an equivalent to the known system **100,** without requiring complex modification operations, and in particular without requiring any modification to the pre-existing electrical switching box.

In fact, in accordance with an embodiment of the present invention, starting from a system such as the system **100** illustrated in **Figure 1****,** it is sufficient to eliminate the electrical connection between the positive terminal of the motor battery **115** and the first electrical terminal **c1** of the electrical switching box **120** and install the coupling module **205,** connecting the first terminal **a1** of the coupling module **205** to the positive terminal of the motor battery **115,** the second terminal **a2** of the coupling module **205** to the first electrical terminal **c1** of the electrical switching box **120,** the third terminal **a3** of the coupling module **205** to the positive terminal of the service battery **125,** and connecting the terminals of the electromagnet of the relay **210** to the signalling terminal of the alternator **110** and to the terminal **GND.**

Naturally, in order to satisfy local and specific requirements, a person skilled in the art may apply to the invention described above many logical and/or physical modifications and alterations. More specifically, although the invention has been described with a certain degree of particularity with reference to preferred embodiments thereof, it should be understood that various omissions, substitutions and changes in the form and details as well as other embodiments are possible. In particular, different embodiments of the invention may even be practiced without the specific details forth in the preceding description for providing a more thorough understanding thereof; on the contrary, well known features may have been omitted or simplified in order not to obscure the description with unnecessary particulars.

For example, it is emphasized that the concepts of the present invention can be applied to different types of relays **135** and / or relays **210,** having architectures selected from known relay architectures such as SPST, SPDT, SPCO...

Furthermore, the concepts of the present invention can be applied to cases where the relay **135** and / or relay **210** are replaced by other types of electrical power switches or diverters.

Although explicit reference is made in the description only to a case in which the system **200** comprises a single motor battery and a single service battery, the concepts of the present invention apply to cases with a different number of batteries, such as in the case where there is a plurality of service batteries, connected to each other in parallel or in series.

## Claims

1. A system for the electrical connection between a motor battery **(115)** and at least one service battery **(125)** in a vehicle comprising a motor **(105)** mechanically coupled to a current generator **(110)** adapted to generate a current (**Ia**) when the motor **(105)** is turned on, and an electrical switching box **(120)** electrically coupled to said at least one service battery **(125),** said system comprising a coupling module **(205)** distinct from the electrical switching box **(120)** and configured to:
- electrically couple in a selective way the motor battery **(115)** to the electrical switching box **(120)** when the motor is turned off, and
- electrically couple in a selective way the motor battery **(115)** to the at least one service battery **(125)** when the motor is turned on, for allowing the charging of the motor battery **(115)** and of the at least one service battery **(125)** by means of the current (**Ia**) generated by the current generator **(110)** without involving the electrical switching box **(120).**

2. The system of claim 1, wherein said coupling module **(205)** comprises:
- a first terminal (**a1)** electrically coupled to the motor battery **(115);**
- a second terminal **(a2)** electrically coupled to a first electric terminal (**c1)** of the electrical switching box **(120),** and
- a third terminal **(a3)** electrically coupled to said at least one service battery **(125).**

3. The system of claim 2, wherein said coupling module **(205)** is configured to:
- electrically couple the first terminal (**a1)** of the coupling module **(205)** to the second terminal **(a2)** of the coupling module **(205)** when the motor **(105)** is turned off, and
- electrically couple the first terminal (**a1)** of the coupling module **(205)** to the third terminal **(a3)** of the coupling module **(205)** when the motor **(105)** is turned on.

4. The system of claim 3, wherein the coupling module **(205)** comprises a relay **(210).**

5. The system of claim 4, wherein said relay **(210)** comprises:
- a mobile contact electrically connected to the first terminal (**a1)** of the coupling module **(205);**
- a first fixed contact electrically connected to the second terminal **(a2)** of the coupling module **(205),** and
- a second fixed contact electrically connected to the third terminal **(a3)** of the coupling module **(205).**

6. The system of claim 5, wherein said relay **(210)** is configured in such a way that:
- the mobile contact is in contact with the first fixed contact when the motor **(105)** is turned off;
- the mobile contact is in contact with the second fixed contact when the motor **(105)** is turned on.

7. The system of claim 6, wherein said relay **(210)** is adapted to receive a signal **(*D*+)** indicative of a turned on motor **(105)** condition, said relay being configured to cause the mobile contact contact the second fixed contact based on the reception of said signal **(*D*+).**

8. The system of any of the preceding claims, wherein said vehicle is a camper or a boat.

9. The system of any of the preceding claims, wherein said at least one service battery **(125)** is electrically connected to at least one electric load **(130)** for supplying said at least one electric load **(130).**
